# EUROPEAN PATENT SPECIFICATION

(11) **EP 2 751 849 B1**
(45) Date of publication and mention of the grant of the patent: **17.07.2019**
(21) Application number: 12758937.2
(22) Date of filing: 15.08.2012
(51) Int. Cl.: H02S 40/34

(54) **JUNCTION BOX**
PANELDOSE
BOÎTE DE JONCTION

(30) Priority: 29.08.2011 US 201113219763
(43) Date of publication of application: 09.07.2014
(73) Proprietor: TE Connectivity Corporation, Berwyn, PA 19312 (US)
(72) Inventor: ROMAN, Paul David Jr., Harrisburg, PA 17110 (US); GHERARDINI, Stephen Daniel, Harrisburg, PA 17112 (US); LAUERMANN, Mark Edwin, Harrisburg, PA 17112 (US); SATTAZAHN, Steve Douglas, Lebanon, PA 17042 (US)
(74) Representative: Johnstone, Douglas Ian
(86) International application number: PCT/US2012/050891
(87) International publication number: WO 2013/032704

(56) References cited:
- EP-A2- 2 330 634
- DE-A1-102007 006 433
- DE-B3-102004 020 958
- DE-U1-202009 012 176

## Description

The subject matter described and/or illustrated herein relates generally to photovoltaic (PV) modules, and, more particularly, to a junction box for interconnecting PV modules with a power distribution system.

To produce electricity from solar energy, PV modules include a plurality of PV cells interconnected in series and/or parallel, according to the desired voltage and current parameters. PV cells are essentially large-area semiconductor diodes. Due to the photovoltaic effect, the energy of photons is converted into electrical power within a PV cell when the PV cell is irradiated by a light source, such as sunlight. Within a PV module, the PV cells are typically sandwiched between a transparent panel and a dielectric substrate. The PV cells within the PV module are typically interconnected by an electrically conductive foil, such as a metallic foil. A plurality of PV modules that are mechanically and electrically connected together is sometimes referred to as a PV panel.

A plurality of PV modules and/or PV panels is often interconnected, in series and/or parallel, to create a PV array. Junction boxes are typically used to electrically connect the PV modules and/or PV panels to each other and to an electrical power distribution system. Each junction box includes a housing that is mounted on the dielectric substrate of the corresponding PV module. The housing holds electrical contacts that engage the foil that interconnects the PV cells through the dielectric substrate to electrically connect the PV module to the junction box. The junction box is electrically connected to the power distribution system via cables that are terminated by connectors that electrically connect to the electrical contacts of the junction box. The foil of the PV module is electrically connected to the junction box by bending the foil up through an opening within the dielectric substrate and into the junction box housing. The foil is then wrapped around the electrical contacts of the junction box within the housing to electrically connect the PV module to the electrical contacts. Bending the foil through the opening of the dielectric substrate and wrapping the foil around the electrical contacts within the housing may increase a difficulty, a time, and/or a cost of connecting the junction box to the PV module. EP 2,330,634 discloses a terminal box for a solar cell module. The terminal box includes two terminal plates with pressing pieces for connecting to output terminals from the solar cell. A diode is connected between the two terminal plates, and input terminals of output cables are connected to the terminal plates.

According to various embodiments of the invention, there is provided a junction box according to any one of the appended claims. The junction box includes a housing configured to be mounted on the PV module, the housing comprising a mating interface and an opening formed in the housing for engaging foil of the PV module. The housing is configured to mate with a mating conductor of the power distribution system at the mating interface. Engagement features positioned in the housing to secure a component form an electrical connection between the component, foil of the PV module and the mating conductor.

The invention will now be described by way of example with reference to the accompanying drawings in which:
FIG. 1 shows a partially exploded perspective view of an exemplary embodiment of a junction box and a photovoltaic (PV) module assembly according to the disclosure.
FIG. 2 shows a perspective view of a junction box assembled to a photovoltaic (PV) module according to the disclosure.
FIG. 3 shows a cross-section taken along line 3-3 of FIG. 2 according to the disclosure.
FIG. 4 shows an enlarged, partial cross-section taken along line 4-4 of FIG. 2 according to the disclosure.
FIG. 5 shows an enlarged, partial cross-section taken along line 5-5 of FIG. 2 according to the disclosure.
FIG. 6 shows a perspective view of an alternate embodiment of a junction box according to the disclosure.
FIG. 7 shows an inverted, exploded perspective view of the junction box of FIG. 6 according to the disclosure.
FIG. 8 shows a perspective view of an assembled junction box of FIG. 7 according to the disclosure.
FIG. 9 shows a perspective view of the junction box of FIG. 7 prior to assembly with a photovoltaic (PV) module assembly according to the disclosure.
FIG. 10 shows a perspective view of the junction box of FIG. 9 subsequent to assembly with the photovoltaic (PV) module assembly according to the disclosure.
FIG. 11 shows an exploded perspective view of a housing surrounding the junction box of FIG. 9 according to the disclosure.
FIG. 12 shows a perspective view of the assembled housing of FIG. 11 according to the disclosure.
FIG. 13 shows a perspective view of the junction box of FIG. 9 assembled to the assembled housing of FIG. 12 according to the disclosure.
FIG. 14 shows a perspective view of the junction box/assembled housing of FIG. 13 including a top member according to the disclosure.
FIG. 15 shows a perspective view of an exemplary embodiment of a cap according to the disclosure.
FIG. 16 shows a perspective view of the cap assembled with the junction box/assembled housing FIG. 13 according to the disclosure.

Wherever possible, the same reference numbers will be used throughout the drawings to represent the same parts.

In an exemplary embodiment, a junction box is provided for electrically connecting a photovoltaic (PV) module to a power distribution system having a mating conductor. The junction box includes a housing configured to be mounted on the PV module, the housing comprising a mating interface and an opening formed in the housing for engaging foil of the PV module. The housing is configured to mate with a mating conductor of the power distribution system at the mating interface. Engagement features positioned in the housing to secure a component form an electrical connection between foil of the PV module and the mating conductor.

In another exemplary embodiment, a junction box is provided for electrically connecting a photovoltaic (PV) module to a power distribution system having a mating conductor. The junction box includes a housing having a mounting side configured to be mounted on the PV module. The housing includes a mating interface and an opening extending through the mounting side in the housing for engaging foil of the PV module. The housing is configured to mate with a mating conductor of the power distribution system at the mating interface. Engagement features are positioned in the housing to secure a component forming an electrical connection between foil of the PV module and the mating conductor.

In another exemplary embodiment, a junction box is provided for electrically connecting a photovoltaic (PV) module to a power distribution system having a mating conductor, the junction box includes a housing configured to be mounted on the PV module. The housing includes a mating interface and an opening formed in the housing to receive foil extending from the PV module, the housing being configured to mate with a mating conductor of the power distribution system at the mating interface. Engagement features are positioned in the housing to secure a component forming an electrical connection between foil of the PV module and the mating conductor.

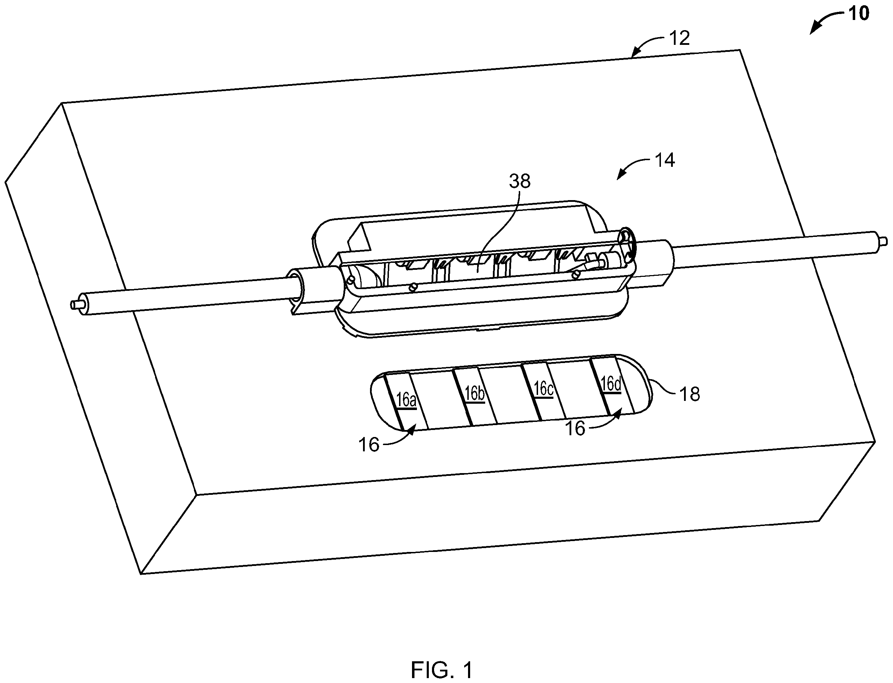

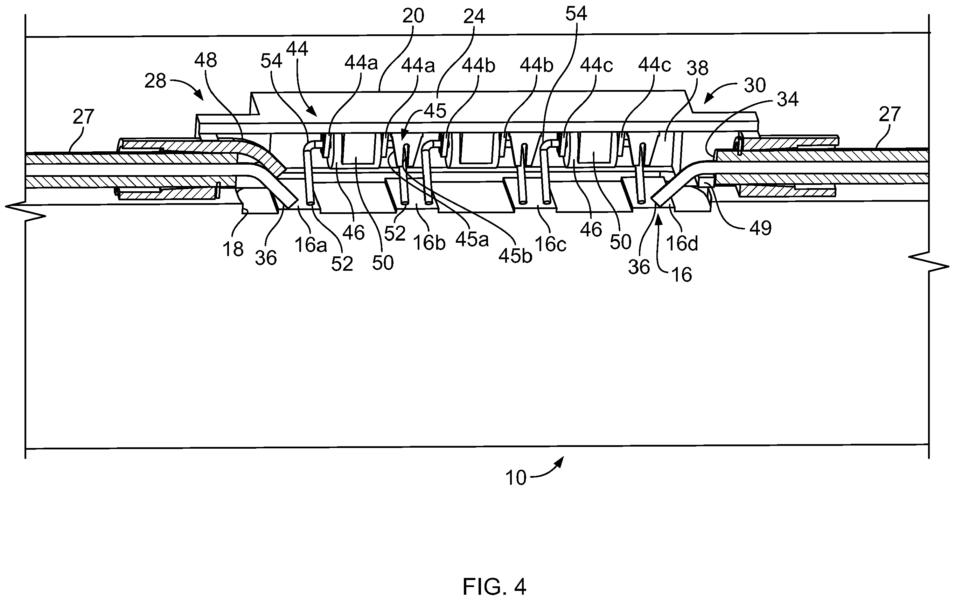

FIG. 1 is a partially exploded perspective view of an exemplary embodiment of a junction box and photovoltaic (PV) module assembly 10. Assembly 10 includes a PV module 12 and a junction box 14. Only a portion of PV module 12 is shown herein and is discussed in additional detail in Applicant's US Patent No. 7,824,189 titled JUNCTION BOX FOR PHOTOVOLTAIC MODULES, which is incorporated by reference in its entirety. PV module 12 includes PV cells (not shown) that is as are electrically interconnected with each other, in series and/or parallel, by an electrically conductive foil 16, such as, but not limited to, a metallic foil and/or the like. As further shown in FIG. 4, foil 16 of PV module 12 is exposed through an opening 18 formed in PC module 12. In the exemplary embodiment, the foil 16 includes four electrical contact portions 16a, 16b, 16c, 16d, also individually or collectively referred to as foils, that are exposed through the opening 18.

Returning to FIG. 1, junction box 14 is mounted on the PV module 12 for electrically connecting the PV module 12 to a power distribution system (not shown). The power distribution system distributes electrical power generated by PV module 12 to an electrical load (not shown), an electrical storage device (not shown), and/or the like. Junction box 14 may also electrically connect PV module 12 to other PV modules (not shown). For example, a plurality of PV modules may be mechanically and electrically interconnected, in series and/or parallel, to create a PV panel (not shown). Moreover, a plurality of PV modules and/or PV panels may be electrically interconnected to create a PV array.

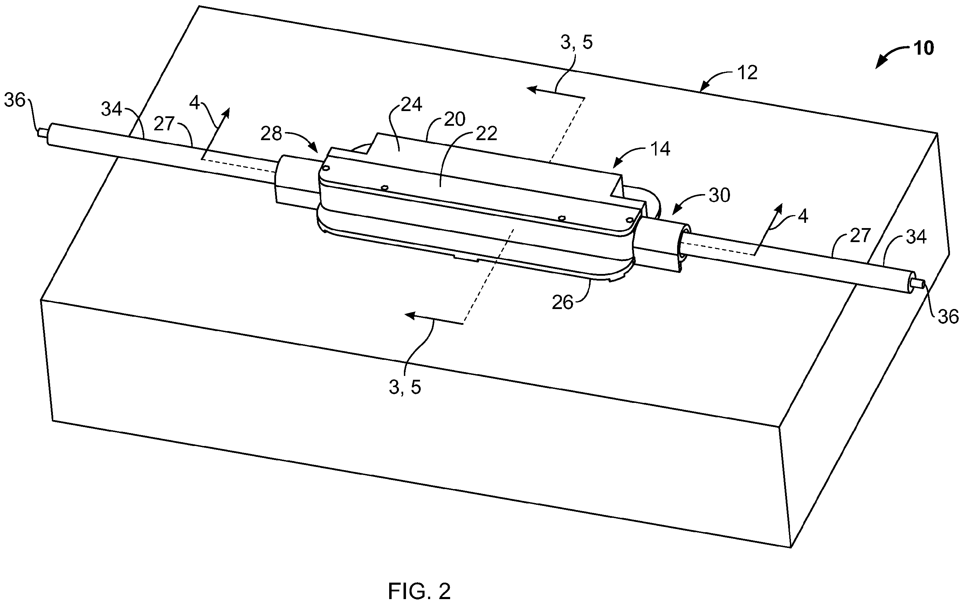

FIGS. 2-5 show different views of an exemplary embodiment of junction box 14, with FIG. 2 shown assembled to photovoltaic (PV) module assembly 10, which assembly includes (PV) module 12. Junction box 14 includes a housing 20 and an optional cover 22. Housing 20 has an exterior side 24 and a mounting side 26. In the exemplary embodiment, housing 20 of the junction box 14 includes a pair of respective mating interfaces 28, 30. Housing 20 is configured to mate with a corresponding mating connector (not shown) of the power distribution system (not shown) at each of the mating interfaces 28, 30. Each of the mating connectors of the power distribution system terminates a corresponding electrical wire or cable of the power distribution system. In one embodiment, a mating connector can be a mating conductor or connector 27 as shown in the figures, such as an electrical cable or wire, including an insulating layer 34 and a conductor 36 (FIG. 2). For purposes herein, the terms mating connector or mating conductor may be used interchangeably. As will be described below, mating of the housing 20 with the mating connectors or conductors establishes an electrical connection between the junction box 14 and the wires and/or cables of the power distribution system. At an end (not shown) opposite the mating connector or conductor, each wire or cable of the power distribution system may be electrically connected to an electrical load (not shown), an electrical storage device (not shown), the junction box (not shown) of another PV module (not shown), another component of the power distribution system, and/or the like.

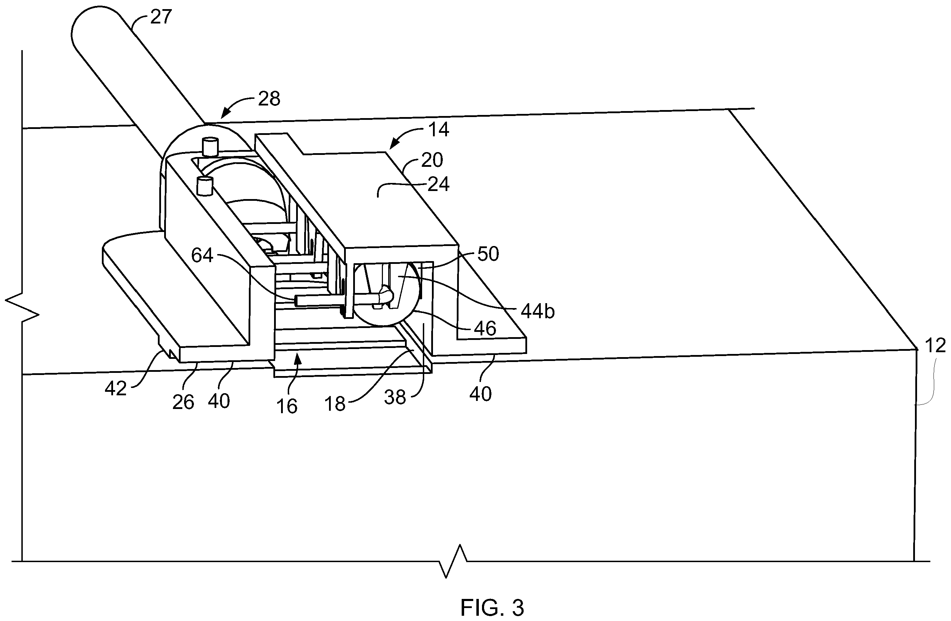

FIG. 3 is a cross-section of junction box 14 taken along line 3-3 of FIG. 2, illustrating exterior side 24, as well as an opening 38 formed in junction box 14 through mounting side 26, such that opening 38 is in fluid communication between mounting side 26 and exterior side 24. FIG. 3 further shows that mounting side 26 of junction box 14 is mounted on PV module 12 over opening 18 formed in the PV module. In FIG. 3, cover 22 has been removed from the junction box 14. The mounting side 26 of the housing 20 is configured to be mounted PV module 12 (FIG. 1). In the exemplary embodiment, mounting side 26 of housing 20 includes a mounting surface 40 that faces PV module 12 when housing 20 is mounted on PV module 12. Housing 20 may be mounted on PV module 12 using any suitable method, process, means, structure, connection type, and/or the like. In the exemplary embodiment, housing 20 is mounted on PV module 12 using an adhesive (not shown), such as, but not limited to, room temperature vulcanizing (RTV) silicone and/or the like. In some embodiments, the adhesive seals the housing 20 to PV module 12. Mounting surface 40 includes an optional rib or standoff rib 42 (Fig. 3) that may accommodate excess adhesive during mounting of housing 20 on PV module 12. In some embodiments, mounting surface 40 of housing 20 engages PV module 12 when housing 20 is mounted on PV module 12. However, it should be understood that when adhesive is used to mount housing 20 on PV module 12, a portion or all of mounting surface 40 may not engage PV module 12, but rather the adhesive may space a portion or all of the mounting surface 40 from PV module 12.

As further shown in FIGS. 3-5, housing 20 includes opening 38 that extends into housing 20 through mounting side 26. In the shown exemplary embodiment, opening 38 also extends through exterior side 24 so that opening 38 is in fluid communication with mounting side 26 and exterior side 24. Housing 20 includes engagement features 44 (including at least engagement features 44a, 44b, 44c) positioned in housing 20 to secure a component 46, such as a diode, that forms an electrical connection between foil 16 of the PV module 12. As further shown in the figures, engagement features 44 can secure component 46 that form an electrical connection between foil 16 of the PV module 12 and mating connector 27.

For example, as shown in FIG. 4, conductor 36 of mating connector 27 is directed through mating interface 28 including a guiding feature 48 for guiding conductor 36 toward foil 16a of PV module 12. Alternately, as further shown in FIG. 4, conductor 36 of mating connector 27 is directed through mating interface 30 until sufficiently inserted into mating interface 30, such as by abutting contact of insulating layer 34 of mating connector 27 with an anvil 49. After abutting contact is achieved between insulating layer 34 and anvil 49, conductor 36 may be plastically deformed or bent over anvil 49, until conductor 36 has been directed into close proximity with foil 16d of PV module 12. As further shown in FIGS. 4-5, component 46, such as a diode, is guided through opening 38 formed in housing 20 and toward a guiding feature 50 to more easily permit installation of component 46 inside of housing 20. As further shown in FIGS. 4-5, diode or component 46 includes a pair of opposed legs or conductors 52 and further include a bend 54 formed in each of legs or conductors 52, which component 46 and conductors 52 are collectively secured inside of housing 20.

Upon sufficient insertion of diode or component 46 into guiding feature 50, corresponding portions of conductors 52 extending from diode or component 46 and located between the body of diode or component 46 and bend 54 of conductors 52 are directed into a slot 56 formed in engagement features 44, such as engagement features 44b. Slot 56 of engagement features 44 includes a retention feature 58, such as one or more protrusions 60 and/or one or more recessed regions 62, which retention feature 58 is configured to retain a corresponding conductor 52 within slot 56 of engagement feature 44. In one embodiment, one or more of retention features 58 are formed in engagement feature 44 during manufacturing, such as a molding process, although in another embodiment one or more of retention features 58 can be formed in engagement feature 44 during or subsequent to installation of a corresponding conductor 52 within slot 56. For example, a tool, such as pliers or an automated tool can be used to form retention features 58 at any stage of the manufacturing/installation process, which retention feature formation technique sometimes referred to as "cold staking".

As further shown in FIGS. 4-5, once conductors 52 of diode or component 46 are installed in retention features 58 of engagement features 44, diode or component 46 can rotate about an axis defined by the retention features 58 between a first position 64 and a second position 66. In first position 64, at least one end of component conductor 52 opposite component 46 is secured by an engagement feature 45. Engagement feature 45 includes one or more tapered sides 45a and/or a slot 45b formed therein. As shown in FIGS. 4-5, engagement feature 45 includes a pair of opposed tapered sides 45a separated by slot 45b. Depending upon location of engagement feature 45, one end of component conductor 52 may be secured by tapered side 45a or by slot 45b. In another embodiment, engagement feature 45 can secure one end of component conductor 52 of each of adjacent component 46, as a result of abutting contact with each of respective opposed tapered sides 45a. In yet another embodiment, engagement feature 45 may not be required, if engagement features 44 provide sufficient rotational resistance of component 46 such that an end of conductor 52 remains in the desired location after manufacturing, such as first position 64.

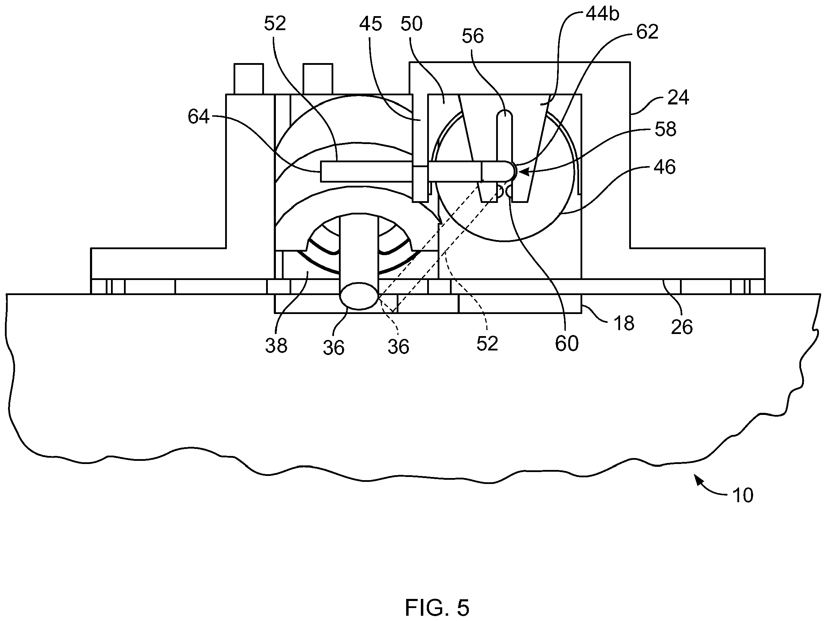

As further shown in FIG. 3, conductors 52 of components 46 are located in first position 64, in which conductors 52 remain spaced apart or separated from contact with foils 16 of PV module 12. However, once housing 20 of junction box 14 is properly positioned with respect to PV module 12, it is then desirable for conductors 52 of components 46 to be shifted from first position 64 to second position 66 (FIG. 5), which second position 66 placing conductors 52 in close proximity with foils 16 of PV module 12. Engagement features 44, 45 are utilized to secure ends of conductors 52 in first position 64, in which housing 20 of junction box 14 substantially encloses components 46, including conductors 52 such that conductors 52 remain in first position 64 until it is desirable to shift conductors 52 from first position 64 to second position 66. A simple tool (not shown) may be utilized to easily shift the orientation of conductors 52 from first position 64 to second position 66. Upon such shifting of conductors 52 previously secured by engagement features 44, 45 from first position 64 to second position 66, as well as utilizing mating interface 28, 30, as shown in FIG. 4, ends of corresponding conductors 36 of mating conductor or connector 27 and conductors 52 of components 46 are placed in close proximity of each other on respective foils. That is, for example, as shown in FIG. 4, the end of conductor 36 extending through mating interface 28, one end of conductor 52 of component 46, and foil 16a are positioned in sufficiently close proximity with each other to permit soldering or other suitable technique to secure an electrical connection therebetween. Similarly, corresponding ends of conductors 52 of components 46, one end of conductor 52 of component 46 extending through mating interface 30 and foils 16b, 16c, 16d are positioned in sufficiently close proximity with each other to permit soldering or other suitable technique to secure an electrical connection therebetween. Stated another way, in the shown exemplary embodiment of FIGS. 1-5, electrical connections between corresponding ends of conductors 36, 52 and foils 16a, 16b, 16c, 16d (totaling twelve (12) separate components in this particular instance) can be achieved with four (4) solder joints, or other suitable technique usable to form electrical connections associated with each foil, without having to bend or otherwise manipulate the foils to surround or "wrap around" corresponding conductors to achieve electrical connections therebetween. It is to be understood that in other embodiments, the number of conductors and foils may be greater than or less than the number disclosed in the exemplary embodiment.

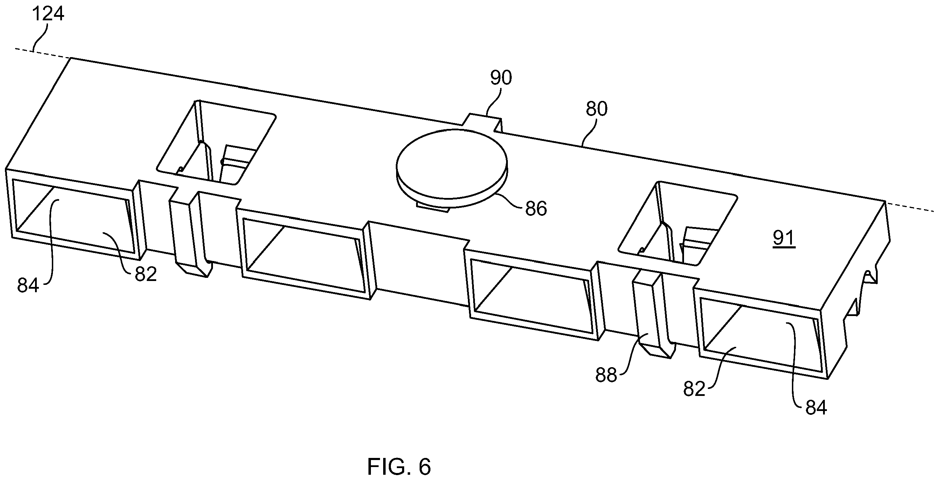

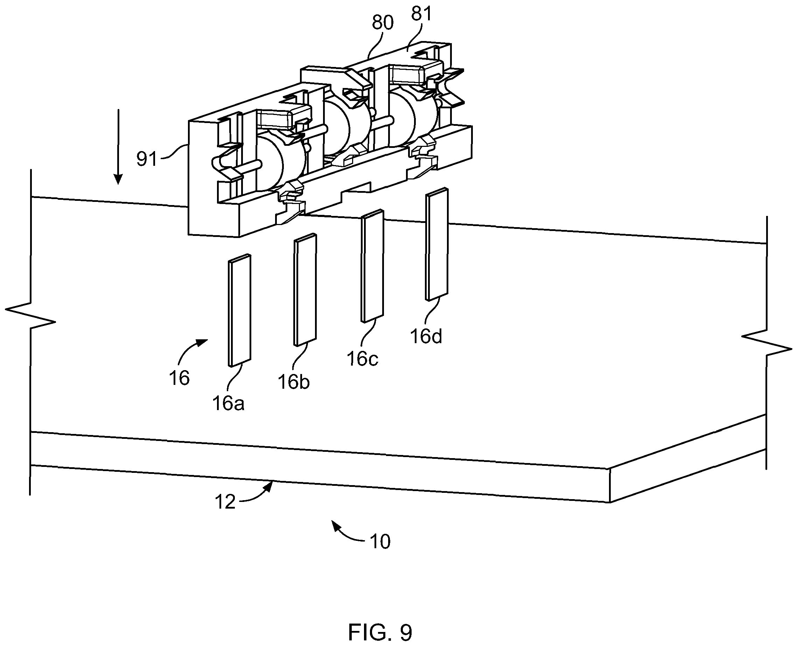

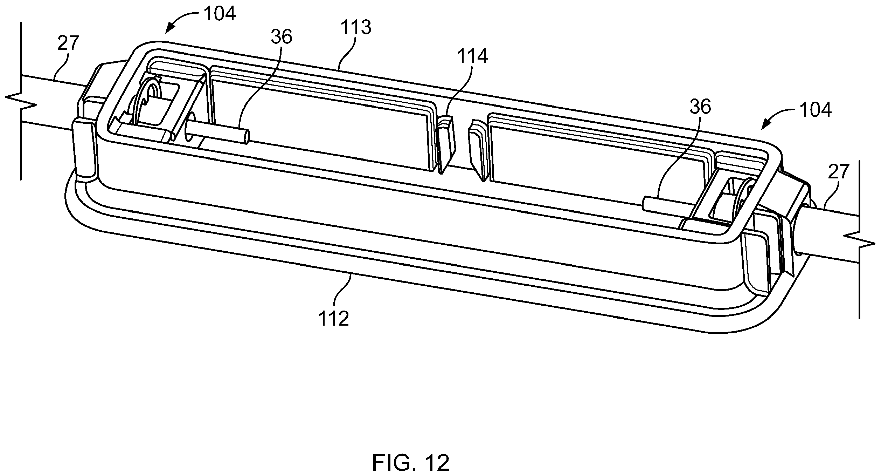

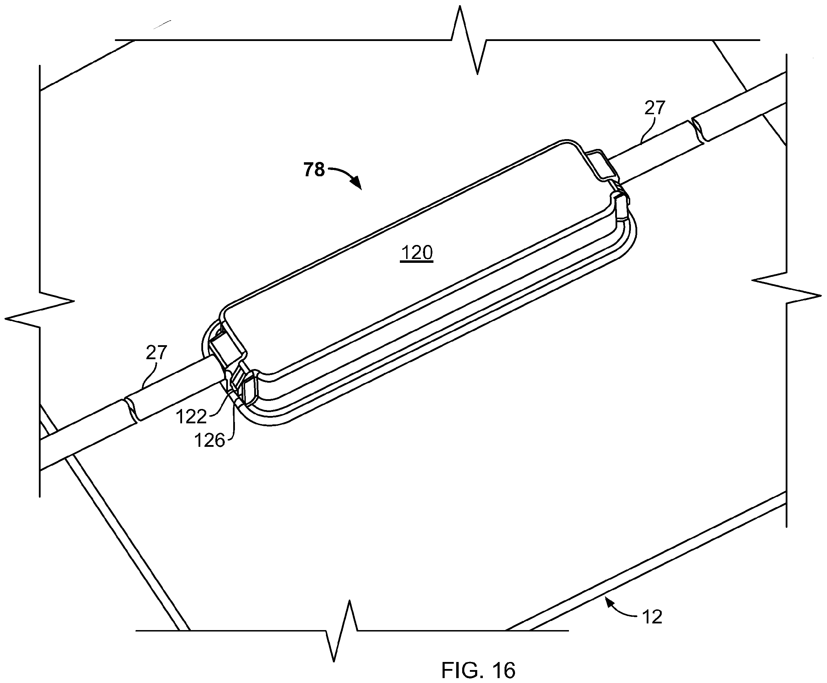

FIGS. 6-16 show an alternate embodiment of a junction box 78 (FIG. 16). Junction box 78 includes a housing 80 (FIG. 6) having a mounting surface 91 for positioning housing 80 on PV module 12 (FIG. 9). Mounting surface 91 includes a positioner 86, such as a layer of double-sided tape to secure mounting surface 91 to PV module 12. Housing 80 includes alignment features 88, 90 corresponds to an enclosure 112 (FIG. 12) and an opening 82 that includes and further extends to a tapered inlet 84 for receiving foil 16 of PV module 12 (FIG. 9).

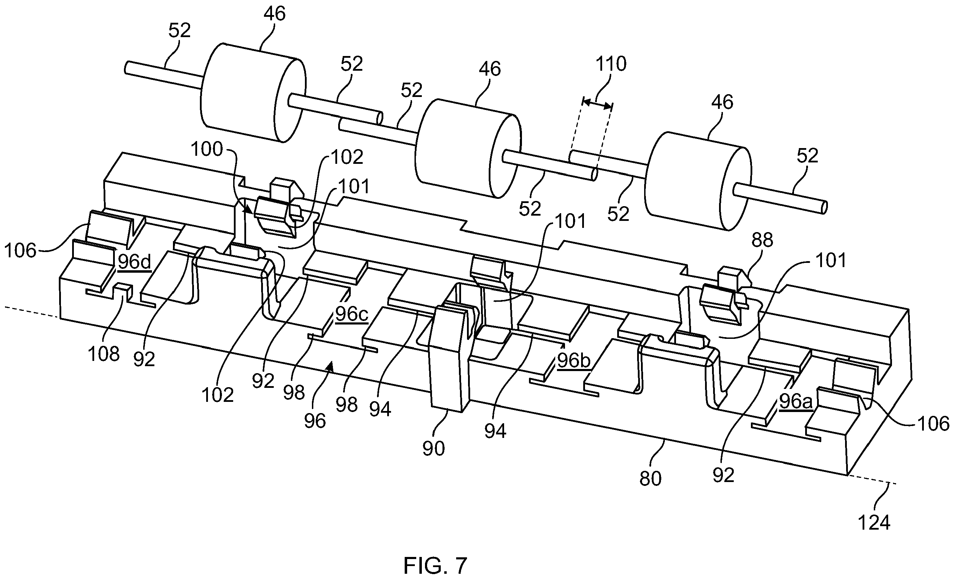

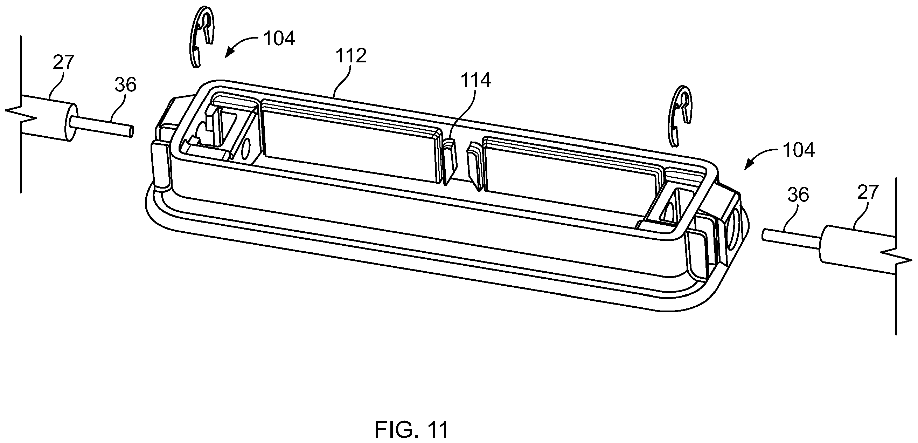

As further shown in FIG. 7, which shows FIG. 6 rotated 180 degrees about axis 124 and inclusion of components 46 such as diodes, housing 80 includes an engagement feature 100 including opposed engagement members 102 in cooperation with a recess 101 for securing the body of component 46 within housing 80. Extending along housing 80 from opposed sides of recess 101 are respective slots 92, 94 which are sized to receive legs or conductors 52 extending from component 46 when secured in housing 80. Although openings 82 and corresponding tapered inlets 84 are not shown in FIG. 7, the tapered inlets include and extend to corresponding channels 96 formed in housing 80. In addition, as further shown in FIG. 7, channel 96 includes opposed protrusions 98 partially extending over channel 96, which protrusions in combination with channel 96 define undercut channels in which the spacing between the ends of opposed protrusions 98 is less than the width of corresponding foils 16 of PV module 12 (FIG. 9). For purposes of identification and understanding of the disclosure, undercut channels include undercut channels 96a, 96b, 96c, 96d. Optionally, a stop or protrusion 108 may be positioned at an end of channel 96, if desired, in order to limit insertion of respective foils 16 of PV module 12 into a corresponding channel 96. Opposed engagement features 106 are formed in housing 80 for receiving conductors 36 of mating connectors 27 (FIG. 11).

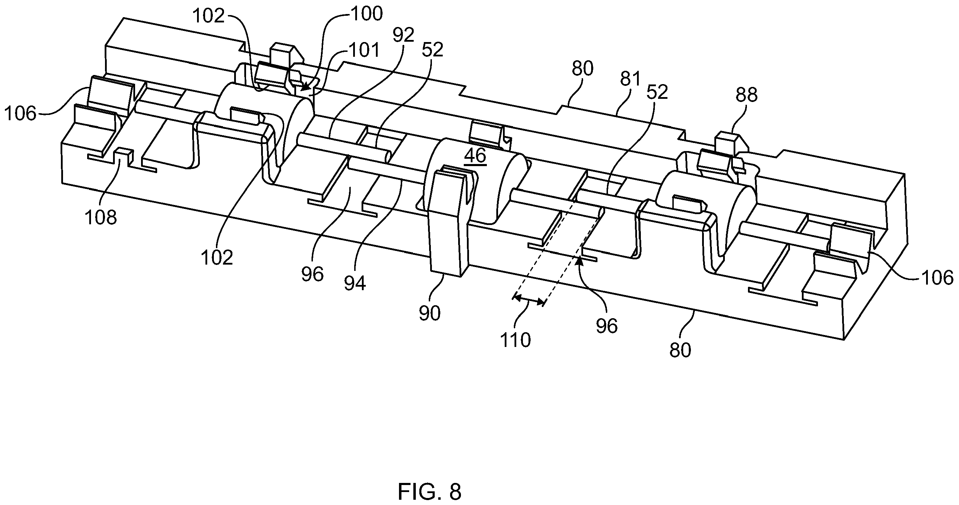

As further shown in FIG. 8, in which components 46 of FIG. 7 have been installed in housing 80, and defining a partially assembled housing assembly 81, ends of conductors 52 of adjacent components 46 include an overlap 110 associated with a corresponding channel 96 so that the ends of conductors 52 are in close proximity with each other. In another embodiment, there is no overlap of ends of conductors 52, so long as the conductor ends are in close proximity of each other. Additionally, engagement members 102 of engagement feature 100 is configured such that engagement members 102 may elastically flex, permitting movement of component 46 in respective recesses 101 formed in housing 80 (and respective conductors 52 in corresponding slots 92, 94) to accommodate a range of foil thicknesses. Alternately, or in combination with flexing engagement members 102, the depth of channels 96 may vary to accommodate a range of foil thickness.

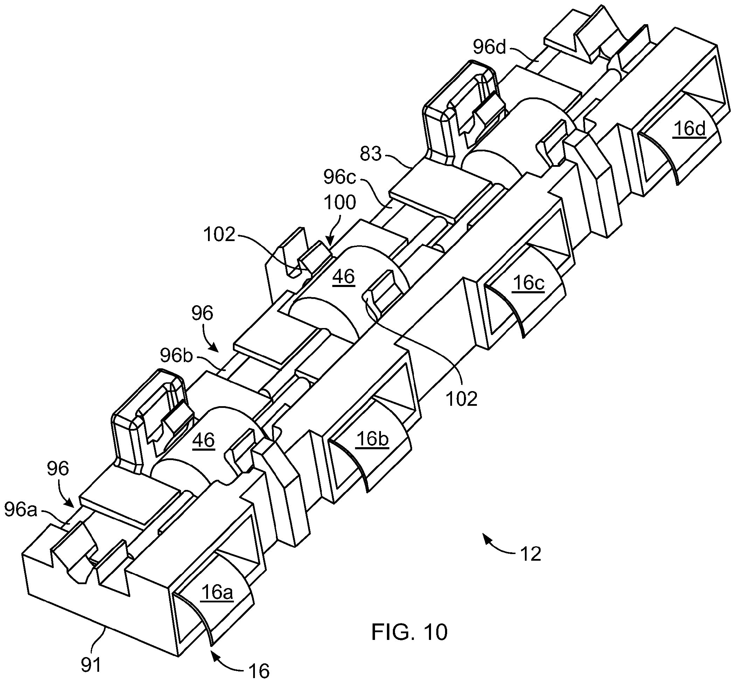

FIG. 9 shows partially assembled housing assembly 81 prior to insertion of foils 16 extending outwardly from PV module 12. FIG. 10 shows partially assembled housing assembly 81 subsequent to insertion of foils 16, which insertion of foils 16 re-identifies partially assembled housing assembly 81 as interconnected housing assembly 83. Foils 16a, 16b, 16c, 16d are inserted into respective channels 96a, 96b, 96c, 96d. In the exemplary embodiment, subsequent to insertion of foils 16, interconnected housing assembly 83 is rotated so that mounting surface 91 is brought into contact with a corresponding surface of PV module 12.

FIG. 11 shows an exploded perspective view of enclosure 112 including an alignment feature 114 that corresponds to alignment feature 90 as shown in FIG. 7. Enclosure 112 further includes opposed mating interfaces 104 for guiding and receiving respective mating connectors 27 therein. FIG. 12 shows enclosure 112 subsequent to insertion of mating connectors 27, which insertion of mating connectors 27 re-identifies enclosure 112 as partially assembled enclosure assembly 113.

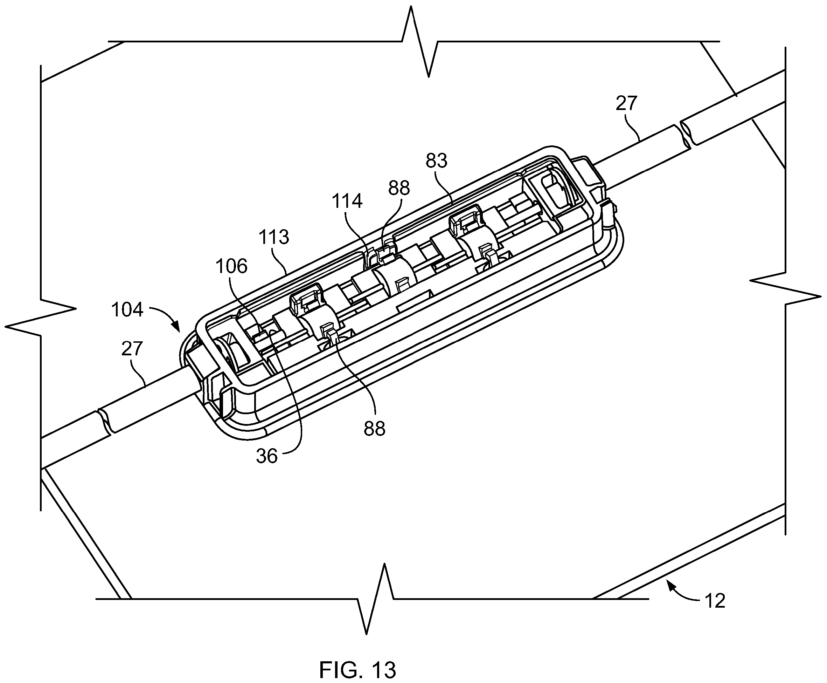

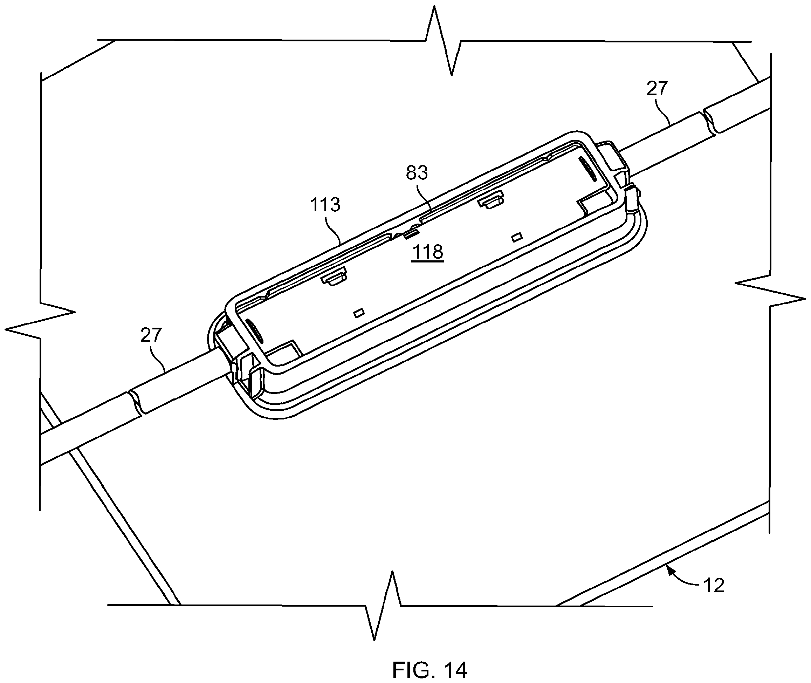

FIG. 13 shows partially assembled enclosure assembly 113 assembled with interconnected housing assembly 83 in which alignment feature 88 and alignment feature 114 are utilized for ease of assembly, with conductor 36 of respective mating connectors 27 engaging respective engagement feature 106 of interconnected housing assembly 83. FIG. 14 includes the addition of a cover member 118.

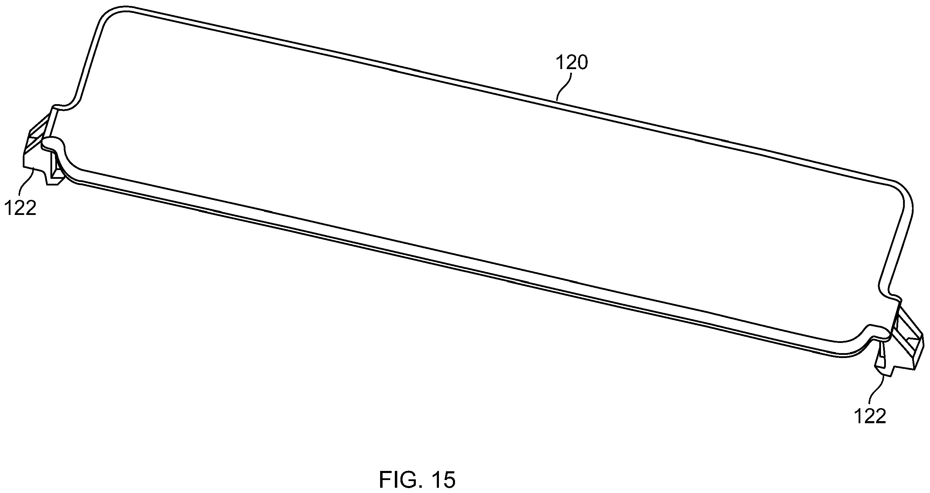

FIG. 15 shows a cap 120 having opposed retention features 122. FIG. 16 shows the installation of cap 120 over cover member 118 (FIG. 14), in which retention features 122 of cap 120 are brought into engagement with guides 126.

The embodiments described and/or illustrated herein may provide a junction box that is less difficult, less costly, and/or less time-consuming to electrically connect to a PV module than at least some known junction boxes. For example, the embodiments described and/or illustrated herein may provide a junction box having electrical contacts that are less difficult, less costly, and/or less time-consuming to electrically connect to a PV module than at least some known junction boxes.

## Claims

1. A junction box (14) for electrically connecting a photovoltaic (PV) module (12) to a power distribution system having a mating conductor (27), the junction box (14) comprising:
a housing (20) configured to be mounted on the PV module (12), the housing comprising a mating interface (28) and an opening (38) formed in the housing for engaging foil (16) of the PV module, the housing (20) being configured to mate with a mating conductor (36) of the power distribution system at the mating interface (28); and
engagement features (44, 45) positioned in the housing to secure a component (46) forming an electrical connection between foil (16a) of the PV module and the mating conductor (36),
**characterized in that** the engagement features (44, 45) secure the component (46) to form the electrical connection between the component, the foil of the PV module, and the mating conductor (36), the electrical connection being at the foil of the PV module (12).

2. The junction box of claim 1, wherein an end of the mating conductor (36), an end of a conductor (52) of the component (46), and the foil (16), are positioned in sufficiently close proximity with each other to form the electrical connection therebetween.

3. The junction box of claim 1, wherein the housing (20) comprises a mounting side (26) configured to be mounted on the PV module (12), the housing opening formed in the housing for engaging foil (16) of the PV module through the mounting side.

4. The junction box of claim 3, wherein the component (46) forming an electrical connection is contained inside the housing (20).

5. The junction box of claim 4, wherein the component (46) is secured by the engagement features (44, 45) in a first position (64) prior to assembly with the PV module.

6. The junction box of claim 4, wherein the component (46) is secured by the engagement features (44, 45) in a second position during assembly with the PV module.

7. The junction box of claim 4, wherein the component (46) forming an electrical connection between foil of the PV module and the mating conductor (36) is a diode.

8. The junction box of claim 7, wherein legs (52) of the diode form an electrical connection between foil of the PV module and the mating conductor (36).

9. The junction box of claim 1, wherein the opening (82) formed in the housing for engaging foil includes a tapered inlet (84) for insertion of the foil.

10. The junction box of claim 9, wherein the tapered inlet (84) extends to a channel (96).

11. The junction box of claim 10, wherein the channel (96) is an undercut channel.

12. The junction box of claim 11, wherein the undercut channel terminates at a protrusion (108).

13. The junction box of claim 1, wherein the mating interface (28) comprises a guiding feature (48) for guiding the mating conductor toward foil of the PV module.

14. The junction box of claim 13, wherein the guiding feature (48) comprises an anvil (49) permitting a conductor (36) to be directed toward a foil (16a) as the conductor is plastically deformed along a contact surface of the anvil.

15. The junction box of claim 14, wherein the guiding feature (48) comprises a passageway.

## Patentansprüche

1. Anschlussdose (14) zum elektrischen Verbinden eines Photovoltaik-(PV)-Moduls (12) mit einem Stromverteilersystem, das einen Gegenleiter (27) aufweist, wobei die Anschlussdose (14) Folgendes umfasst:
ein Gehäuse (20), konfiguriert zum Montieren am PV-Modul (12), wobei das Gehäuse eine Paarungsschnittstelle (28) und eine Öffnung (38) aufweist, die in dem Gehäuse für einen Eingriff mit einer Folie (16) des PV-Moduls ausgebildet ist, wobei das Gehäuse (20) so konfiguriert ist, dass es mit einem Gegenleiter (36) des Stromverteilersystems an der Paarungsschnittstelle (28) zusammengesteckt werden kann; und
Eingriffsmerkmale (44, 45), die in dem Gehäuse positioniert sind, um eine Komponente (46) zu befestigen, die eine elektrische Verbindung zwischen der Folie (16a) des PV-Moduls und dem Gegenleiter (36) bildet,
**dadurch gekennzeichnet, dass** die Eingriffsmerkmale (44, 45) die Komponente (46) befestigen, um die elektrische Verbindung zwischen der Komponente, der Folie des PV-Moduls und dem Gegenleiter (36) zu bilden, wobei die elektrische Verbindung an der Folie des PV-Moduls (12) ist.

2. Anschlussdose nach Anspruch 1, wobei ein Ende des Gegenleiters (36), ein Ende eines Verbinders (52) der Komponente (46) und die Folie (16) in ausreichender Nähe zueinander positioniert sind, um die elektrische Verbindung dazwischen zu bilden.

3. Anschlussdose nach Anspruch 1, wobei das Gehäuse (20) eine Montageseite (26) aufweist, die zum Montieren am PV-Modul (12) konfiguriert ist, wobei die Gehäuseöffnung im Gehäuse ausgebildet ist, um in die Folie (16) des PV-Moduls durch die Montageseite einzugreifen.

4. Anschlussdose nach Anspruch 3, wobei die eine elektrische Verbindung bildende Komponente (46) im Gehäuse (20) enthalten ist.

5. Anschlussdose nach Anspruch 4, wobei die Komponente (46) durch die Eingriffsmerkmale (44, 45) vor der Montage am PV-Modul in einer ersten Position (64) befestigt wird.

6. Anschlussdose nach Anspruch 4, wobei die Komponente (46) durch die Eingriffsmerkmale (44, 45) während der Montage am PV-Modul in einer zweiten Position befestigt wird.

7. Anschlussdose nach Anspruch 4, wobei die eine elektrische Verbindung zwischen der Folie des PV-Moduls und dem Gegenleiter (36) bildende Komponente (46) eine Diode ist.

8. Anschlussdose nach Anspruch 7, wobei Schenkel (52) der Diode eine elektrische Verbindung zwischen der Folie des PV-Moduls und dem Gegenleiter (36) bilden.

9. Anschlussdose nach Anspruch 1, wobei die in dem Gehäuse für den Eingriff mit Folie ausgebildete Öffnung (82) einen konischen Einlass (84) zum Einführen der Folie beinhaltet.

10. Anschlussdose nach Anspruch 9, wobei sich der konische Einlass (84) zu einem Kanal (96) erstreckt.

11. Anschlussdose nach Anspruch 10, wobei der Kanal (96) ein hinterschnittener Kanal ist.

12. Anschlussdose nach Anspruch 11, wobei der hinterschnittene Kanal an einem Vorsprung (108) endet.

13. Anschlussdose nach Anspruch 1, wobei die Paarungsschnittstelle (28) ein Führungsmerkmal (48) zum Führen des Gegenleiters in Richtung Folie des PV-Moduls umfasst.

14. Anschlussdose nach Anspruch 13, wobei das Führungsmerkmal (48) einen Amboss (49) umfasst, der das Richten eines Leiters (36) zu einer Folie (16a) zulässt, während der Leiter entlang einer Kontaktfläche des Ambosses plastisch verformt wird.

15. Anschlussdose nach Anspruch 14, wobei das Führungsmerkmal (48) einen Durchgang umfasst.

## Revendications

1. Boîte de jonction (14) destinée à connecter électriquement un module photovoltaïque (PV) (12) à un système de distribution d'énergie présentant un conducteur de couplage (27), la boîte de jonction (14) comprenant :
un boîtier (20) configuré pour être monté sur le module PV (12), le boîtier comprenant une interface de couplage (28) et une ouverture (38) formée dans le boîtier pour se mettre en prise avec une feuille (16) du module PV, le boîtier (20) étant configuré pour s'accoupler avec un conducteur de couplage (36) du système de distribution d'énergie au niveau de l'interface de couplage (28) ; et
des éléments de mise en prise (44, 45) positionnés dans le boîtier pour fixer un composant (46) formant une connexion électrique entre une feuille (16a) du module PV et le conducteur de couplage (36),
**caractérisée en ce que** les éléments de mise en prise (44, 45) fixent le composant (46) pour former la connexion électrique entre le composant, la feuille du module TV, et le conducteur de couplage (36), la connexion électrique se situant au niveau de la feuille du module PV (12).

2. Boîte de jonction selon la revendication 1, dans laquelle une extrémité du conducteur de couplage (36), une extrémité d'un conducteur (52) du composant (46), et la feuille (16), sont positionnés suffisamment près les uns des autres pour former la connexion électrique entre eux.

3. Boîte de jonction selon la revendication 1, dans laquelle le boîtier (20) comprend un côté de montage (26) configuré pour être monté sur le module PV (12), l'ouverture de boîtier étant formée dans le boîtier pour se mettre en prise avec la feuille (16) du module PV à travers le côté de montage.

4. Boîte de jonction selon la revendication 3, dans laquelle le composant (46) formant une connexion électrique est contenu à l'intérieur du boîtier (20).

5. Boîte de jonction selon la revendication 4, dans laquelle le composant (46) est fixé par les éléments de mise en prise (44, 45) dans une première position (64) avant l'assemblage avec le module PV.

6. Boîte de jonction selon la revendication 4, dans laquelle le composant (46) est fixé par les éléments de mise en prise (44, 45) dans une seconde position (64) durant l'assemblage avec le module PV.

7. Boîte de jonction selon la revendication 4, dans laquelle le composant (46) formant une connexion électrique entre la feuille du module PV et le conducteur de couplage (36) est une diode.

8. Boîte de jonction selon la revendication 7, dans laquelle des pattes (52) de la diode forment une connexion électrique entre la feuille du module PV et le conducteur de couplage (36).

9. Boîte de jonction selon la revendication 1, dans laquelle l'ouverture (82) formée dans le boîtier pour la mise en prise avec la feuille comporte une entrée conique (84) pour l'insertion de la feuille.

10. Boîte de jonction selon la revendication 9, dans laquelle l'entrée conique (84) s'étend jusqu'à un canal (96).

11. Boîte de jonction selon la revendication 10, dans laquelle le canal (96) est un canal de contre-découpe.

12. Boîte de jonction selon la revendication 11, dans laquelle le canal de contre-découpe se termine au niveau d'une protubérance (108).

13. Boîte de jonction selon la revendication 1, dans laquelle l'interface de couplage (28) comprend un élément de guidage (48) pour guider le conducteur de couplage vers la feuille du module PV.

14. Boîte de jonction selon la revendication 13, dans laquelle l'élément de guidage (48) comprend une enclume (49) permettant de diriger un conducteur (36) vers une feuille (16a) lorsque le conducteur est déformé de manière plastique le long d'une surface de contact de l'enclume.

15. A Boîte de jonction selon la revendication 14, dans laquelle l'élément de guidage (48) comprend un passage.
